## Europäisches Patentamt

## European Patent Office

## Office européen des brevets

(19)

(11) Veröffentlichungsnummer : **0 148 988**
**B1**

(12) **EUROPÄISCHE PATENTSCHRIFT**

(45) Veröffentlichungstag der Patentschrift :
**20.01.88**

(21) Anmeldenummer : **84109147.3**

(22) Anmeldetag : **02.08.84**

(51) Int. Cl.⁴ : **F 24 H   6/00**, F 24 D  11/00,
**F 24 D   9/00**

(54) Verfahren und Vorrichtung zur Erwärmung der Raumluft, insbesondere von Wohnungen.

(30) Priorität : **14.01.84 DE 3401136**

(43) Veröffentlichungstag der Anmeldung :
**24.07.85 Patentblatt 85/30**

(45) Bekanntmachung des Hinweises auf die Patenterteilung : **20.01.88 Patentblatt 88/03**

(84) Benannte Vertragsstaaten :
**AT BE CH DE FR GB IT LI LU NL SE**

(56) Entgegenhaltungen :
**EP-A- 0 080 090**
**EP-A- 0 083 726**
**FR-A- 2 525 746**

(73) Patentinhaber : **Vereinigte Elektrizitätswerke Westfalen AG**
**Rheinlanddamm 24**
**D-4600 Dortmund 1 (DE)**

(72) Erfinder : **Trümper, Heinrich, Prof. Dipl.-Ing.**
**Teichwinkel 7**
**D-5100 Aachen (DE)**
Erfinder : **Knoche, Karl-Friedrich, Prof. Dr.-Ing.**
**Wiesenweg 87**
**D-5100 Aachen (DE)**
Erfinder : **Hain, Klaus, Dipl.-Ing.**
**Kongressstrasse 10**
**D-5100 Aachen (DE)**

(74) Vertreter : **Patentanwälte Meinke und Dabringhaus**
**Dipl.-Ing. J. Meinke Dipl.-Ing. W. Dabringhaus**
**Westenhellweg 67**
**D-4600 Dortmund 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung richtet sich auf ein Verfahren zur Erwärmung der Raumzuluft, insbesondere von Wohnungen, unter Einsatz einer fossile Brennstoffe verarbeitenden Wärmequelle, eines Wasser-Wärmespeichers, eines Wasser-Wärmetauschers im Abgasstrom der Wärmequelle sowie einer Wärmetausch-Einrichtung zur Erwärmung von Raumzuluft sowie eine Vorrichtung zur Durchführung dieses Verfahrens.

Neben klassischer Beheizung von Gebäuden und Wohnungen, z. B. über Zentralheizungen, mit warmwasser oder elektrisch beheizten Fußbodenheizungen u. dgl., ist es bekannt, Umluftheizungen vorzusehen, d. h. aus Räumen, wie z. B. Küchen über die Dunstabzugshaube und Badezimmer, Luft abzusaugen, diese über einen Wärmetauscher zu leiten und einem Wärmwasserbereiter zuzuführen, wobei über den Wärmetauscher Außenluft angesogen, erwärmt und den Räumen als Zuluft zugeführt wird, vgl. z. B. « kontrollierte Lüftung und Wärmerückgewinnung im Ein- und Zweifamilienhaus », Osburg, Sonderdruck aus « sbz », 36. Jahrgang, 1981, Seiten 884 bis 888.

Die bekannte Vorgehensweise hat zum einen den Nachteil, daß Kuchen- und Badezimmerschwaden einen hohen Feuchtigkeitsgehalt aufweisen und zum anderen sind die Wärmeinhalte nicht immer so hoch, daß eine ausreichende Zulufttemperatur gewährleistet ist, so daß es weiterer Sekundärwärmequellen zur Abdeckung der Grundlast bedarf. Die gattungsbildende EP-A-0 083 726 beschäftigt sich mit diesem Problem. Bei dieser dort beschriebenen Lösung ist im Abgasstrom der Wärmequelle ein Wärmetauscher vorgesehen, um die Raumzuluft zu erwärmen. Dabei sind besondere Maßnahmen getroffen, um eine Versottung der Kamine bzw. Schornsteine zu verhindern, d. h. die Abgas- bzw. Rauchgastemperatur muß im Schornstein noch vergleichsweise noch sein.

Aufgabe der Erfindung ist die Schaffung einer Lösung, mit der eine Optimierung des Wärmetauschs vorgenommen wird, wobei gleichzeitig die im Abgas enthaltenen Wärmeinhalte in sehr hohem Maße zur Erwärmung der Raum-Zuluft genutzt werden können, wobei das Vorsehen eines Schornsteines oder Kamines entbehrlich ist, da das Gemisch Abluft/Abgas ins Freie geleitet werden kann.

Bei einem Verfahren der eingangs bezeichneten Art wird diese Aufgabe gemäß der Erfindung dadurch gelöst, daß die Erwärmung der Raumzuluft zweistufig vorgenommen wird, wobei in einer ersten Stufe die den Raum verlassende Abluft in Wärmetausch im Kreuz- oder Gegenstrom mit vorzuerwärmender Außenluft gebracht wird, während in einer zweiten Stufe das Abgas vom Wasserwärmetauscher mit der durch die Abluft vorgewärmten Außenluft in Wärmetausch im Kreuz- oder Gegenstrom gebracht wird, wobei diese zweistufig vorgewärmte Außenluft dem Raum als Zuluft zugeführt wird und wobei die die erste Stufe verlassende Abluft und das die zweite Stufe verlassende Abgas zusammengeführt und gemeinsam als Fortluft ausgetragen werden.

Mit der erfindungsgemäßen Verfahrensweise läßt sich ein sehr hoher Ausnutzungsgrad erreichen, wobei die zweistufige Ausführung der Erwärmung zunächst als Vorwärmung durch Abluft einerseits und dann als Nacherwärmung durch die Abgäse der Wärmequelle andererseits sich als besonders zweckmäßig erwiesen hat. Wesentlich ist dabei die Trennung der Ströme der Abluft einerseits und der Abgase andererseits, um deren unterschiedliche Temperaturen optimaler nutzen zu können. Diese Verfahrensweise ermöglicht es auch, konstruktiv sehr kompakte Geräte zu schaffen, wobei durch Mischung der beiden Gasströme erst nach den Wärmetauschern einmal deren Wärmeinhalte optimaler benutzt werden können und es zum anderen nur eines einzigen Gebläses zum Austragen dieses Gasstromes bedarf.

Die Erfindung sieht auch vor, daß die Wärmequelle modulierend im Dauerbetrieb betrieben wird.

Mit der Erfindung ist es namlich möglich, die Wärmequelle, z. B. einen Gasbrenner, im Dauerbetrieb betreiben zu können, und zwar bei einem vergleichsweise niedrigen Niveau, da die so erzeugte Wärme einmal einem Wasserwärmespeicher zugeführt werden kann und zum anderen zur erwärmung der Raumzuluft dient. Die Steuerung über die Temperatur der Außenluft einerseits und z. B. dem Verbrauch an Wärmwasser andererseits ist dabei besonders einfach und wirtschaftlich durchzuführen. Selbstverständlich kann die Wärmequelle auch nach der Erfindung, wie an sich bekannt, intervallartig betrieben werden.

Die eingangs bezeichnete Aufgabe wird bei einer Vorrichtung mit einer fossile Brennstoffe verarbeitenden Wärmequelle, einem Wasser-Wärmespeicher, eines Wasser-Wärmetauschers im Abgasstrom der Wärmequelle sowie einer Wärmetausch-Einrichtung zur Erwärmung von Raumzuluft dadurch gelöst, daß die Wärmetauscheinrichtung als Außenluft-Raumzuluft-/Raumabluft-Fortluft-Wärmetauscher als Kreuz-, Gegen- oder Kreuz/Gegenstrom-Wärmetauscher ausgebildet und zur direkten Erwärmung in Strömungsrichtung der Außenluft- zunächst in einen Abluft-Wärmetauscher und stromabwärts von diesem in einen Abgas-Wärmetauscher unterteilt ist und daß hinter dem Abluft- und dem Abgas-Wärmetauscher eine Sammelkammer für die Abluft und die Abgase und ein Austraggebläse für dieses Fortluftgemisch vorgesehen ist.

Die beanspruchte Vorrichtung ermöglicht eine sehr Kompakte Bauweise, was bei dem bevorzugten Einsatzgebiet, nämlich der Beheizung von Wohnungen, besonders wichtig ist. So ist es möglich, innerhalb eines gemeinsamen Gehäuses beispielsweise den Warmwasserwärmespeicher, die Wärmequelle, z. B. den Gasbrenner, und die gesamte Wärmetauscheinrichtung unterzubringen, wobei es, wie oben erwähnt, eines Kaminanschlusses nicht bedarf. Die Fortluft kann direkt nach außen abgeleitet werden, z. B. durch entsprechende Mauerdurchbrüche, wie sie bei Küchendunstabzugshauben üblich und bekannt sind.

Es versteht sich von selbst, daß ggf. anfallendes Kondensat über entsprechende Einrichtungen abgeleitet werden kann, ggf. entschwefelt u. dgl. mehr.

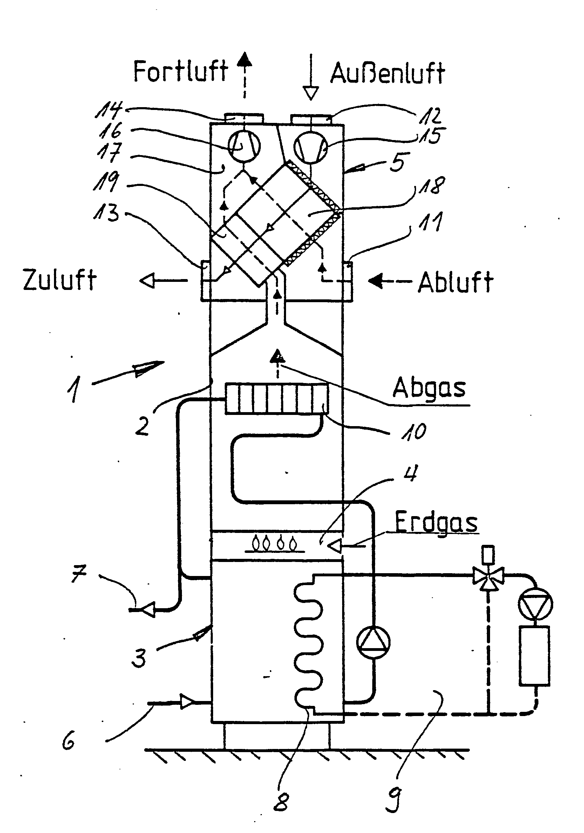

Die Erfindung ist nachstehend anhand der Zeichnung beispielsweise naher erläutert. Diese zeigt in der einzigen Figur eine Prinzipdarstellung der erfindungsgemäßen Vorrichtung zur Durchführung des erfindungsgemäßen Verfahrens.

Die allgemein mit 1 bezeichnete Vorrichtung beherbergt im darstellten Beispiel innerhalb eines Gehäuses 2 von unten nach oben einen Warmwasserwärmespeicher 3, eine erdgasbefeuerte Wärmequelle 4 sowie einen für die Erfindung wesentlichen zweistufigen Wärmetauscher 5, als zweistufiger Kreuzstromwärmetauscher.

Der Warmwasserwärmespeicher 3 ist mit einem Kaltwasserzulauf 6 und einem Warmwasserablauf 7, z. B. zum Anschluß an Badezimmerinstallationen o. dgl., versehen. Innerhalb des Wärmespeichers 3 befindet sich ein Wärmetauscher 8 für einen Sekundärheizkreis 9, der zur Übernahme der Heizspitzen dient, wenn die Beheizung mit erwärmter Zuluft, wie dies weiter unten näher beschrieben ist, nicht mehr ausreichen sollte.

Die erdgasbetriebene Wärmequelle 4 gibt zunächst ihre Wärme an einen Wasserwärmetauscher 10 ab, der, wie dargestellt, Wasser aus dem Wärmespeicher 3 entnimmt und dem Wärmespeicher erwärmtes Wasser zuführt.

Der für die Erfindung wesentliche Wärmetauscher 5 ist, wie bereits oben erwähnt, als zweistufiger Kreuzstromwärmetauscher ausgebildet, wobei es allerdings auf den Kreuzstrom an sich nicht ankommt, vielmehr auf die Zweistufigkeit. Er ist mit vier Anschlüssen versehen, und zwar mit einem Abluftansaugstutzen 11, einem Außenluftansaugstutzen 12, einem Zuluftabgabestutzen 13 sowie einem Fortluftabgasstutzen 14. Die Außenluft wird über symbolisch angedeutete Gebläse 15 angesogen, während die Fortluft über ebenfalls symbolisch angedeutete Gebläse 16 ausgetragen wird, und zwar im dargestellten Beispiel aus einer Sammelkammer 17, die die beiden gestrichelt dargestellten Luft- bzw. Gasströme der Abluft einerseits und des Abgases andererseits hinter den Wärmetauschern mischt. Die erste Stufe des Wärmetauschers ist mit 18 bezeichnet. Sie ist abluftdurchströmt und wärmt die von außen angesogene Außenluft zunächst vor. Der zweite, nachgeschaltete Wärmetauscher ist mit 19 bezeichnet und wird vom Abgas der Wärmequelle 4 beheizt. Die vorgewärmte Außenluft wird dann weiter erwärmt und als Zuluft über den Zuluftstutzen 13 einem Raum bzw. einem Verteilersystem für mehrere Räume zugeführt.

Lediglich als Beispiel seien einige Temperaturen angegeben, wobei die Erfindung selbstverständlich nicht hierauf beschränkt ist. Die Abluft, d. h. die Luft, die aus den Räumen abgesogen wird und durch Zuluft ersetzt wird, kann z. B. eine Temperatur von ca. 22 °C aufweisen. Die Außenluft könnte z. B. 5 °C warm sein, nach Verlassen des ersten Wärmetauschers 18, z. B. auf 15° erwärmt sein und schließlich mit einer Temperatur von ca. 23 °C als Zuluft einem Raum eingeblasen werden, wobei diese Zulufttemperatur ca. 3 bis 4 °C über der Raumtemperatur liegen sollte.

Natürlich ist das beschriebene Ausführungsbeispiel der Erfindung noch in vielfacher Hinsicht abzuändern, ohne den Grundgedanken zu verlassen. So ist die Erfindung insbesondere nicht, wie weiter oben schon erwähnt, auf die Führung der Abgase und Abluftströme beschränkt, diese können im Kreuz-, im Gegenstrom oder auch in Mischformen ebenso wie parallel geführt sein. Sollte dies zweckmäßig sein, kann der Wärmetauscher auch mehrstufig, z. B. dreistufig, sein was dann nützlich sein könnte, wenn die angezogene Abluft unterschiedliche Feuchtigkeitsgehalte hat und z. B. vorgetrocknet werden müßte. Dies könnte auch für die Abgasströme der Fall sein, je nach Qualität der eingesetzten fossilen Brennstoffe, um die an die Umgebung abzugebenden Gasqualitäten zu erreichen. Es versteht sich von selbst, daß auch hier ein Kondensatabzug vorgesehen ist.

**Patentansprüche**

1. Verfahren zur Erwärmung der Raumzuluft, insbesondere von Wohnungen, unter Einsatz einer fossile Brennstoffe verarbeitenden Wärmequelle (4), eines Wasser-Wärmespeichers (3), eines Abgas/Wasser-Wärmetauschers (10) im Abgasstrom der Wärmequelle sowie einer Wärmetausch-Einrichtung (5), zur Erwärmung von Raumzuluft dadurch gekennzeichnet, daß die Erwärmung der Raumzuluft zweistufig vorgenommen wird, wobei in einer ersten Stufe (18) die den Raum verlassende Abluft in Wärmetausch im Kreuz- oder Gegenstrom mit vorzuerwärmender Außenluft gebracht wird, während in einer zweiten Stufe (19) das Abgas vom Abgas-/Wasserwärmetauscher (10) mit der durch die Abluft vorgewärmten Außenluft in Wärmetausch im Kreuz- oder Gegenstrom gebracht wird, wobei diese zweistufig vorgewärmte Außenluft dem Raum als Zuluft zugeführt wird und wobei die die erste Stufe verlassende Abluft und das die zweite Stufe verlassende Abgas zusammengeführt und gemeinsam als Fortluft ausgetragen werden.

2. Verfahren nach Anspruch 1, dadurch gekennzeichnet, daß die Wärmequelle modulierend im Dauerbetrieb betrieben wird.

3. Vorrichtung, zur Durchführung des Verfahrens nach den Ansprüchen 1 oder 2, mit einer fossile Brennstoffe verarbeitenden Wärmequelle (4), einem Wasser-Wärmespeicher (3), einem Abgas/Wasser-Wärmetauscher (10) sowie einer Wärmetausch-Einrichtung (5) zur Erwärmung von Raumzuluft im Abgasstrom der Wärmequelle, dadurch gekennzeichnet, daß die Wärmetauscheinrichtung (5) als Außenluft-Raumzuluft-/Raumabluft-Fortluft-Wärmetauscher als Kreuz-, Gegen- oder Kreuz/Gegenstrom-Wärmetauscher ausgebildet und zur direkten Erwärmung in Strömungsrichtung der Außenluft zunächst in einen Abluft-Wärmetauscher (18) und stromabwärts von diesem in einen Abgas-Wärmetauscher (19) unterteilt ist und daß hinter der Wärmetausch-Einrichtung (5) eine Sammelkammer (17) für die Abluft und die Abgase und ein Austraggebläse (16) für dieses Fortluftgemisch vorgesehen sind.

## Claims

1. A process for heating the space supply air in particular in homes, using a heat source (4) which uses fossil fuels, a water heat storage means (3), a waste gas water heat exchanger (10) in the waste gas flow of the heat source, and a heat exchange means (5), for heating space supply air, characterised in that heating of the space supply air is effected in two stages, wherein in a first stage (18) the discharge air leaving the space is brought into heat exchange relationship in the cross or counter-flow mode with outside air which is to be preheated while in a second stage (19) the waste gas from the waste gas water heat exchanger (10) is brought into heat exchange relationship in the cross or counter-flow mode with the outside air which is preheated by the discharge air, wherein said outside air which is pre-heated in the two stages is fed to the space as supply air and wherein the discharge air leaving the first stage and the waste gas leaving the second stage are brought together and discharged jointly as exhaust air.

2. A process according to claim 1 characterised in that the heat source is operated in a modulating mode in continuous operation.

3. Apparatus for carrying out the process according to claim 1 or claim 2 comprising a heat source (4) using fossil fuels, a water heat storage means (3), a waste gas water heat exchanger (10) and a heat exchange means (5) for heating space supply air in the waste gas flow of the heat source, characterised in that the heat exchange means (5) is in the form of an outside air-space supply air-/space discharge air-exhaust air-heat exchanger, as a cross-, counter- or cross/counter-flow heat exchanger, and for the purposes of direct heating, in the direction of flow of the outside air, is subdivided firstly into a discharge air heat exchanger (18) and downstream thereof a waste gas heat exchanger (19), and that disposed after the heat exchange means (5) are a collecting chamber (17) for the discharge air and the waste gases and a discharge blower (16) for said exhaust air mixture.

## Revendications

1. Procédé pour chauffer de l'air, en particulier de logements d'habitation, en utilisant une source de chaleur (4) traitant des combustibles fossiles, un accumulateur d'eau chaude (3), un échangeur de chaleur à eau et gaz d'échappement (10) monté dans le courant de gaz d'échappement provenant de la source de chaleur ainsi qu'un dispositif échangeur de chaleur (5) pour chauffer l'air amené dans la pièce, caractérisé en ce que le chauffage de l'air amené dans la pièce est réalisé sur deux étages, l'air d'échappement quittant la pièce étant amené sous forme d'un courant croisé ou à contre-courant avec l'air extérieur préchauffé dans un premier étage (18), alors que dans un second étage (19) les gaz d'échappement provenant de l'échangeur de chaleur à gaz d'échappe-ment/eau (10) sont amenés sous forme d'un courant croisé ou d'un contre-courant en situation d'échange de chaleur avec l'air extérieur préchauffé par l'air d'échappement, cet air extérieur préchauffé sur deux étages étant envoyé dans la pièce en tant qu'air amené alors que l'air d'échappement quittant le premier étage et les gaz d'échappement quittant le second étage sont rassemblés et évacués en commun sous forme d'air expulsé.

2. Procédé selon la revendication 1, caractérisé en ce que la source de chaleur est utilisée de façon modulée en fonctionnement continu.

3. Dispositif pour la mise en œuvre du procédé selon les revendications 1 ou 2, comprenant une source de chaleur (4) traitant des combustibles fossiles, un accumulateur d'eau chaude (3), un échangeur de chaleur à gaz d'échappement/eau (10) ainsi qu'un dispositif échangeur de chaleur (5) pour chauffer l'air amené dans la pièce par le courant de gaz d'échappement provenant de la source de chaleur, caractérisé en ce que le dispositif échangeur de chaleur (5) est constitué sous forme d'un échangeur de chaleur à air extérieur-air amené d'une part et air d'échappe-ment et air expulsé d'autre part et à courant croisé, contre-courant ou courant croisé/contre-courant et est subdivisé pour le chauffage direct, dans le sens du courant de l'air extérieur, d'abord en un échangeur de chaleur d'air d'échappement (18) et en aval de ce dernier en un échangeur de chaleur de gaz d'échappement (19) et en ce qu'à l'arrière du dispositif échangeur de chaleur (5) sont prévues une chambre collectrice (17) pour l'air d'échappement et les gaz d'échappement et une soufflante d'extraction (16) pour ce mélange d'air expulsé.

**0 148 988**

Fortluft ↑   ↓ Außenluft

Zuluft ←   ← Abluft

Abgas

Erdgas